# EUROPÄISCHE PATENTSCHRIFT

(11) **EP 1 247 726 B1**
(45) Veröffentlichungstag und Bekanntmachung des Hinweises auf die Patenterteilung: **21.09.2005**
(21) Anmeldenummer: 02006316.0
(22) Anmeldetag: 21.03.2002
(51) Int. Cl.: B62D 25/06, B62D 25/08, B62D 29/04

(54) **Fahrzeugdach**
Vehicle roof
Toit de véhicule

(30) Priorität: 03.04.2001 DE 10116593
(43) Veröffentlichungstag der Anmeldung: 09.10.2002
(73) Patentinhaber: ArvinMeritor GmbH, 63128 Dietzenbach (DE)
(72) Erfinder: Rieger, Peter, 63739 Aschaffenburg (DE); Röder, Joachim, Dipl.-Ing., 63165 Mühlheim (DE); Audibert, Bernard, 60386 Frankfurt (DE)
(74) Vertreter: Oppermann, Ewald

(56) Entgegenhaltungen:
- DD-A- 257 035
- US-A- 3 635 519
- US-A- 5 120 593

## Beschreibung

Die Erfindung bezieht sich auf ein Fahrzeugdach, insbesondere für Kraftfahrzeuge, entsprechend den Oberbegriffen der nebengeordneten Patentansprüche 1 und 2.

Bevorzugtes Anwendungsgebiet der Erfindung sind Fahrzeugdachmodule, die getrennt von der Fahrzeugkarosserie fertiggestellt und erst am Montageband in der Automobilfabrik mit der Fahrzeugkarosserie vereinigt werden. Derartige Fahrzeugdachmodule erfreuen sich insbesondere wegen der erheblichen Verkürzung der Montagezeit am Montageband einer zunehmenden Bedeutung. Sind derartige Fahrzeugdachmodule mit einer integrierten Schiebedacheinheit ausgerüstet, wie das bei dem Fahrzeugdach gemäß Anspruch 2 der Fall ist, eröffnet die getrennte Herstellung die vorteilhafte Möglichkeit einer Funktionskontrolle der vormontierten Schiebedacheinheit schon vor Vereinigung des Dachmoduls mit der Karosserie.

Bei einem derartigen bekannten Fahrzeugdach (DE 197 09 016 A1) ist entweder der Dachhimmel untrennbarer Bestandteil der an die Dachhaut angeschäumten Innenschale, wenn keine Schiebedacheinheit vorgesehen ist, oder der Dachhimmel ist an dem Schiebedachrahmen befestigt, wenn eine Schiebedacheinheit vorgesehen ist. Jedenfalls ist bei beiden Ausführungsformen eine Austauschbarkeit des Dachhimmels nicht vorgesehen, was aber aus verschiedenen Gründen wünschenswert sein kann. So könnte der Dachhimmel an unterschiedliche Innenausstattungen des Fahrzeugs angepaßt werden, ohne daß hierfür unterschiedliche komplette Dachmodule bereitgehalten werden müssen. Auch kann die Austauschbarkeit eines beschädigten oder verschmutzten Dachhimmels wünschenswert sein, ohne daß dafür das komplette Dachmodul zu entfernen ist.

Gemäß einem nicht vorveröffentlichten Vorschlag für ein derartiges Fahrzeugdach (DE 199 47 238.6) ist der als getrenntes Teil aus Schaumkunststoff vorgeformte Dachhimmel an seiner Oberseite mit Rastelementen versehen, die mit passgenau dazu an der Innenschale angebrachten komplementären Rastelementen lösbar verrastet sind. Ist das Fahrzeugdach mit einer Schiebedacheinheit ausgerüstet, so ist nach diesem Vorschlag der Dachhimmel an seiner Oberseite mit Rastelementen versehen, die mit paßgenau dazu an dem Schiebedachrahmen angebrachten komplementären Rastelementen lösbar verrastet sind. Die Verrastung ermöglicht eine beschädigungsfreie Abnahme des jeweiligen Dachhimmels durch Lösen der Verrastung. Auf diese Weise wird nicht nur ein Austausch des Dachhimmels ermöglicht, das Dachmodul kann auch zunächst ohne Dachhimmel gehandhabt werden, was seine Befestigung an der Fahrzeugkarosserie erleichtert. An dem Dachmodul kann dann ein in der dekorativen Ausbildung seiner unteren Fläche auf die Innnenausstattung des Fahrzeugs abgestimmter Dachhimmel montiert werden.

Bei einem bekannten Personenkraftwagen mit einer Dachschale und einem darunter befindlichen Formhimmel (DD 257 035 A) ist an der aus Stahlblech bestehenden Dachschale eine diese verstärkende Deckschicht aus vorzugsweise Tafelwellpappe festhaftend angeordnet, vorzugsweise mit der Dachschale durch Kleben verbunden. Der Formhimmel ist mit der Dachschale durch mechanische Verankerungsmittel lösbar verbunden, die z.B. als Schiebeclipse oder Druckknöpfe aus Metall ausgebildet und als zunächst getrennte Elemente einerseits an der Deckschicht und andererseits an dem Formhimmel befestigt sind. Die Elemente dieser Schiebeclipse oder Druckknöpfe müssen in zusätzlichen Arbeitsgängen gefertigt und paßgenau an der Deckschicht und dem Formhimmel befestigt werden.

Der Erfindung liegt die Aufgabe zugrunde, bei einem mit oder ohne Schiebedacheinheit entsprechend den Oberbegriffen der Patentansprüche 1 und 2 ausgebildeten Fahrzeugdach einen Dachhimmel vorzusehen, der auf einfache Art und Weise ohne zusätzliche Verbindungselemente montier- und austauschbar ist.

Die hier in Alleinstellung oder in Wortkombinationen verwendete Bezeichnung "Schiebedach" soll für die Zwecke der vorliegenden Erfindung nicht nur solche Konstruktionen einschließen, bei denen der Deckel nach Absenken seiner Hinterkante zur Freigabe der Dachöffnung unter die hintere feste Dachfläche verschiebbar ist, sondern auch Schiebehebedächer, bei denen der Deckel außerdem ausgehend von seiner Schließstellung um eine in der Nähe seiner Vorderkante vorgesehene Schwenkachse zur Ausstellung über die feste Dachfläche verschwenkt werden kann. Auch vorn scharnierte lüftungsklappenähnlich ausstellbare Deckel und sogenannte Oberfirstschiebedächer, bei denen der Deckel nach Anheben seiner Hinterkante teilweise zur Freigabe der Dachöffnung über die hintere feste Dachfläche verschiebbar ist, sollen eingeschlossen sein. Entsprechendes gilt für Dachkonstruktionen mit mehreren Deckeln. Im Prinzip gilt das für alle Konstruktionen, bei denen ein unter der festen Dachfläche befestigter Schiebedachrahmen vorhanden ist.

Die gestellte Aufgabe wird erfindungsgemäß durch die Merkmale der unabhängigen Ansprüche 1 und 2 gelöst. Vorteilhafte Weiterbildungen gehen aus den Unteransprüchen hervor und sind nachfolgend ebenfalls beschrieben.

Beiden in den Ansprüchen 1 und 2 angegebenen Ausgestaltungen ist gemeinsam, daß der jeweilige Dachhimmel an seiner Oberseite mit schienenartigen ersten Führungselementen, die hinterschnittene Gleitflächen aufweisen, versehen ist. Diesen ersten Führungselementen sind schienenartige zweite Führungselemente, die ebenfalls hinterschnittene Gleitflächen besitzen, komplementär zugeordnet. Bei dem Fahrzeugdach entsprechend Anspruch 1 sind die zweiten Führungselemente an der Innenschale angeordnet, während bei dem Fahrzeugdach gemäß Anspruch 2 die zweiten Führungselemente am Schiebedachrahmen vorgesehen sind. Beiden Ausgestaltungen ist wiederum gemeinsam, daß zur Befestigung des Dachhimmels an der Innenschale bzw. an dem Schiebedachrahmen die ersten Führungselemente auf die zweiten Führungselemente mit ihren jeweiligen hinterschnittenen Gleitflächen eingreifend bis zu einer definierten Relativposition von Innenschale bzw. Schiebedachrahmen und Dachhimmel in Parallellage aufgeschoben sind. Durch Verschiebung in Gegenrichtung kann die Befestigung des Dachhimmels auf ebenso einfache Weise wieder aufgehoben werden. Bei der Ausgestaltung gemäß Anspruch 1 sind vorteilhaft die ersten Führungselemente aus dem Schaumkunststoff des Dachhimmels selbst und die zweiten Führungselemente aus dem Schaumkunststoff der Innenschale selbst und damit jeweils einteilig geformt.

Die schienenartigen ersten Führungselemente stehen jeweils aus dem Dachhimmel nach oben, und die zweiten Führungselemente stehen jeweils aus der Innenschale bzw. dem Schiebedachrahmen nach unten vor und sind gemäß Anspruch 3 aus kurzen Profilabschnitten gebildet. Diese sind an jedem ihrer Anbringungsorte paarweise vorgesehen, und zwar sowohl bezüglich der ersten Führungselemente untereinander und der zweiten Führungselemente untereinander als auch bezüglich der Zuordnung der ersten zu den zweiten Führungselementen, d.h. die ersten Führungselemente und die zweiten Führungselemente bilden an jedem Anbringungsort jeweils ein Paar, aber jedes Paar aus ersten Führungselementen bildet am betrachteten Anbringungsort mit dem zugeordneten Paar aus zweiten Führungselementen wiederum ein Paar.

Die schienenartigen ersten Führungselemente und die schienenartigen zweiten Führungselemente sind entsprechend Anspruch 4 vorzugsweise jeweils aus Winkelprofilabschnitten gebildet, wobei die ersten Führungselemente mit ihren zum Dachhimmel parallelen Schenkeln in entgegengesetzte Richtungen weisen, während die zweiten Führungselemente mit ihren zur Innenschale bzw. zum Schiebedachrahmen parallelen Schenkeln zueinandergekehrt sind. Auf diese Weise kommt es beim Aufschieben der ersten Führungselemente auf die zweiten Führungselemente bei der Dachhimmelmontage zu einem formschlüssigen Eingriff der Führungselemente, bei welchem sich die hinterschnitten angeordneten Gleitflächen in flächiger Anlage befinden. Ein vergleichbarer formschlüssiger Eingriff zwischen den ersten und den zweiten Führungselementen läßt sich auch erzielen, wenn die jeweiligen hinterschnittenen Gleitflächen nach Art einer Schwalbenschwanzverbindung miteinander eingreifen.

Bei einer ersten Ausführungsform der Erfindung gemäß Anspruch 5 sind die ersten und zweiten Führungselemente an jedem Anbringungsort paarweise parallel zueinander und an allen Anbringungsorten parallel zueinander angeordnet. Hierbei haben also alle Führungselemente eine zueinander parallele Ausrichtung, die der Aufschieberichtung bei der Dachhimmelmontage bzw. der Abschieberichtung bei der Entfernung des Dachhimmels entspricht. Um eine genaue Lagefixierung zwischen dem Dachhimmel und der Innenschale bzw. dem Schiebedachrahmen zu erzielen, ist hierbei gemäß Anspruch 6 vorgesehen, daß an den ersten oder den zweiten Führungselementen Anschläge angebracht sind, welche den Aufschiebeweg begrenzen.

Eine zweite Ausführungsform der Erfindung sieht gemäß Anspruch 7 vor, daß die ersten und zweiten Führungselemente an jedem Anbringungsort übereinstimmend in Richtung der Deckelverschiebung bezüglich zugeordneter Flächen paarweise zueinander konvergierend angeordnet sind, d.h. an jedem Paar der ersten Führungselemente und an jedem Paar der zweiten Führungselemente schließen die Führungselemente pfeilähnlich gleiche Winkel ein. Bei der Befestigung des Dachhimmels ist dessen Schiebeweg in der gewünschten Relativlage zwischen dem Dachhimmel und der Innenschale bzw. dem Schiebedachrahmen durch das Aufeinandertreffen der zugeordneten Flächen begrenzt.

Wenn das Fahrzeugdach mit einer Schiebedacheinheit ausgerüstet ist, kann die Anordnung entsprechend Anspruch 9 vorteilhaft so getroffen sein, daß die ersten Führungselemente aus dem Schaumkunststoff des Dachhimmels selbst und damit einteilig geformt sind, während die zweiten Führungselemente als Profilabschnitte des Schiebedachrahmens ausgebildet oder als getrennte Teile daran befestigt sind.

Weitere Einzelheiten der Erfindung werden nachfolgend anhand der unterschiedliche Ausführungsformen darstellenden und überwiegend schematischen Zeichnungen näher erläutert.

Darin zeigt:

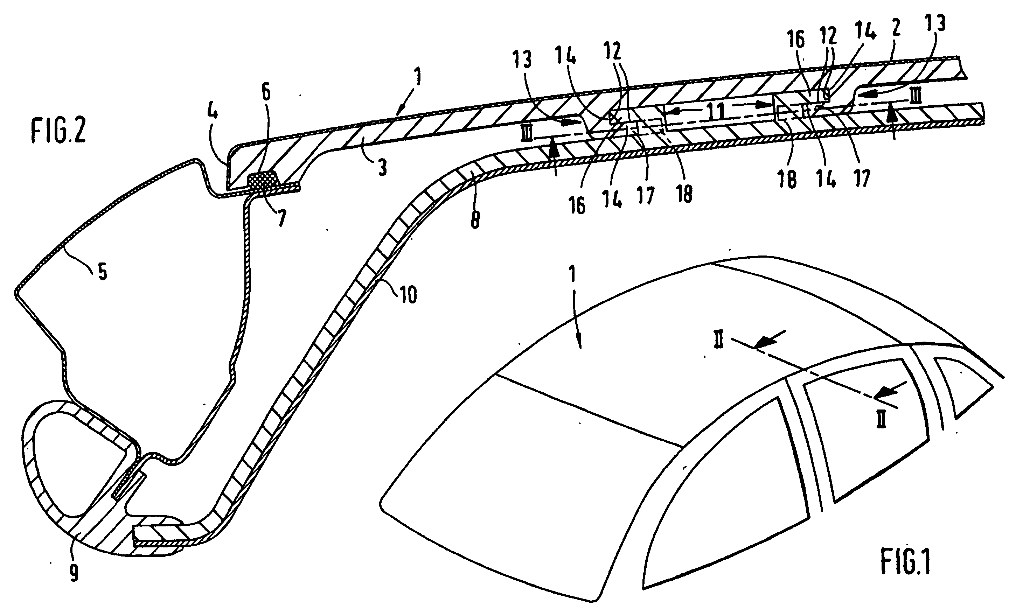

- Fig. 1: eine Perspektivansicht eines Fahrzeugdachs ohne Schiebedacheinheit,
- Fig. 2: den abgebrochenen Schnitt durch das Fahrzeugdach entsprechend der Schnittverlaufslinie II-II in Fig. 1,
- Fig. 3: den abgebrochenen Schnitt durch die ersten und zweiten Führungselemente entsprechend der ersten Ausführungsform entlang der Schnittverlaufslinie III-III in Fig. 2,
- Fig. 4: den abgebrochenen Schnitt durch die ersten und zweiten Führungselemente entsprechend der zweiten Ausführungsform ebenfalls entlang der Schnittverlaufslinie III-III in Fig. 2,
- Fig. 5: die Unteransicht der Innenschale mit den zweiten Führungselementen entsprechend der ersten Ausführungsform,
- Fig. 6: die Unteransicht der Innenschale mit den zweiten Führungselementen entsprechend der zweiten Ausführungsform,
- Fig. 7: eine Perspektivansicht eines Fahrzeugdachs mit Schiebedacheinheit und
- Fig. 8: den abgebrochenen Schnitt durch das Fahrzeugdach entsprechend der Schnittverlaufslinie VIII-VIII in Fig. 7.

Die Figuren 2 bis 4 und 8 zeigen ausschnittsweise Fahrzeugdachmodule mit jeweils montierten Dachhimmeln.

In Fig. 2 ist ein Dachmodul 1 dargestellt, bei dem eine starre Dachhaut 2, die aus einem tiefgezogenen Metallblech, beispielsweise Aluminiumblech, oder einer vakuumverformten Kunststoffolie gebildet sein kann, auf ihrer Innenfläche mit einer aufgeschäumten Innenschale 3 versehen ist. Geeignete Werkstoffe für die Innenschale 3 sind Hartschaumkunststoffe auf PUR-Basis, die durch dem Kunststoff vor dem Aufschäumen einverleibte Faserstoffe, beispielsweise Glasfaserabschnitte, armiert sein können. Aber auch in die Schäumform eingelegte Gewebe, Gewirke, Vliese u.dgl. sind als Armierung geeignet. Durch das Aufschäumen der armierten Innenschale 3, die bis zu einer Randabkantung 4 der Dachhaut 2 reicht, entsteht ein sandwichartiges Verbunddachmodul hoher Formbeständigkeit und Festigkeit. Alle Innenkonturen der Innenschale 3 einschließlich der noch zu beschreibenden Führungselemente werden während des Aufschäumvorgangs durch entsprechende Formgebung der Schäumform gebildet. So ist die Innenschale 3 in ihrem an die Randabkantung 4 angrenzenden Randbereich, mit welchem sie auf einen Karosserierahmen 5 aufgelegt wird, mit einer umlaufend eingeformten Aufnahmenut 6, in welcher eine das Dachmodul 1 gegenüber dem Karosserierahmen 5 abdichtende und daran befestigende Kleberraupe 7 Aufnahme findet.

Dem solchermaßen ausgebildeten Dachmodul 1 ist ein getrennt hergestellter Dachhimmel 8 zugeordnet, der bei dem in Fig. 2 dargestellten Ausführungsbeispiel aus einem Schaumkunststoff vorgeformt ist und den Karosserierahmen 5 abdeckende Bereiche aufweist. Die Verbindung dieser Bereiche mit dem Karosserierahmen 5 kann ein Verbindungskeder 9 übernehmen, der zugleich einen Hohlkammerabschnitt zur Abdichtung der benachbarten Fahrzeugtür (nicht dargestellt) gegenüber dem Karosserierahmen 5 aufweisen kann. Der Dachhimmel 8 kann ebenfalls aus einem geschäumten Kunststoff, beispielsweise auf PUR-Basis, geformt sein. Weiterhin kann der Schaumkunststoff des Dachhimmels 8 auf die bezüglich der Innenschale 3 beschriebene Weise armiert sein. Auf seiner unteren Fläche kann der Dachhimmel 8 dekorativ ausgebildet sein, beispielsweise kann er mit einer Beschichtung 10 aus Textilmaterial oder aus einer Kunststoffolie versehen sein.

Der Dachhimmel 8 ist an seiner Oberseite mit schienenartigen ersten Führungselementen 11 versehen, die hinterschnittene Gleitflächen 12 aufweisen. Den ersten Führungselementen 11 sind komplementär ausgebildete schienenartige zweite Führungselemente 13 an der Innenschale 3 zugeordnet. Diese zweiten Führungselemente 13 besitzen ebenfalls hinterschnittene Gleitflächen 14. Bei der Montage des Dachhimmels 8 wird dieser in Fahrzeuglängsrichtung mit seinen ersten Führungselementen 11 auf die zweiten Führungselemente 13 der Innenschale 3 aufgeschoben, wobei sich der Dachhimmel 8 im wesentlichen in Parallellage zur Innenschale 3 befindet. Bei dem Aufschiebevorgang gelangen die jeweiligen hinterschnittenen Gleitflächen 12 und 14 der ersten Führungselemente 11 bzw. der zweiten Führungselemente 13 in Eingriff. Der Aufschiebevorgang ist beendet, sobald eine definierte Relativposition von Innenschale 3 und Dachhimmel 8 erreicht ist.

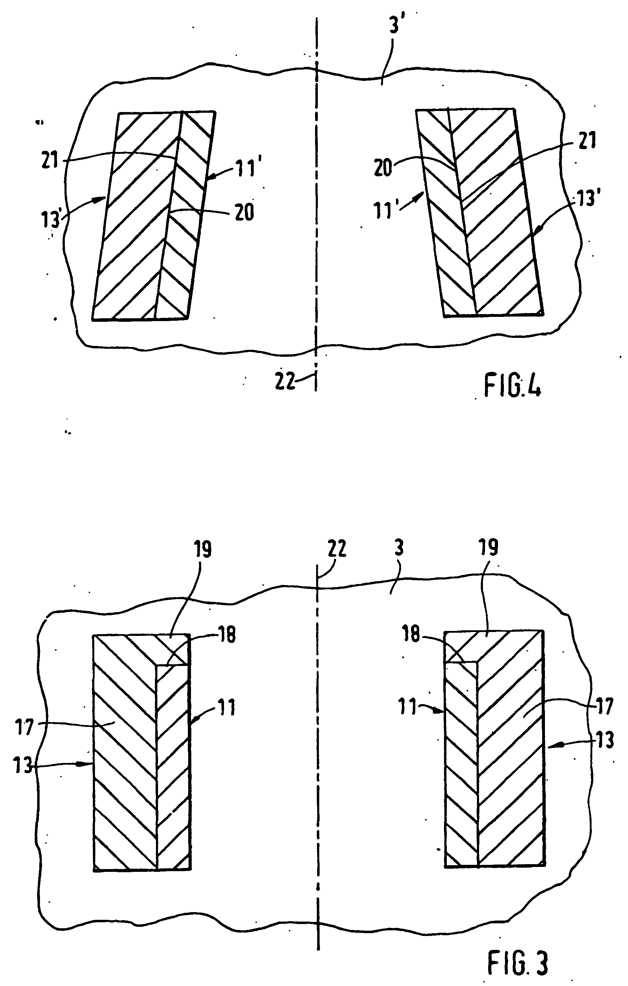

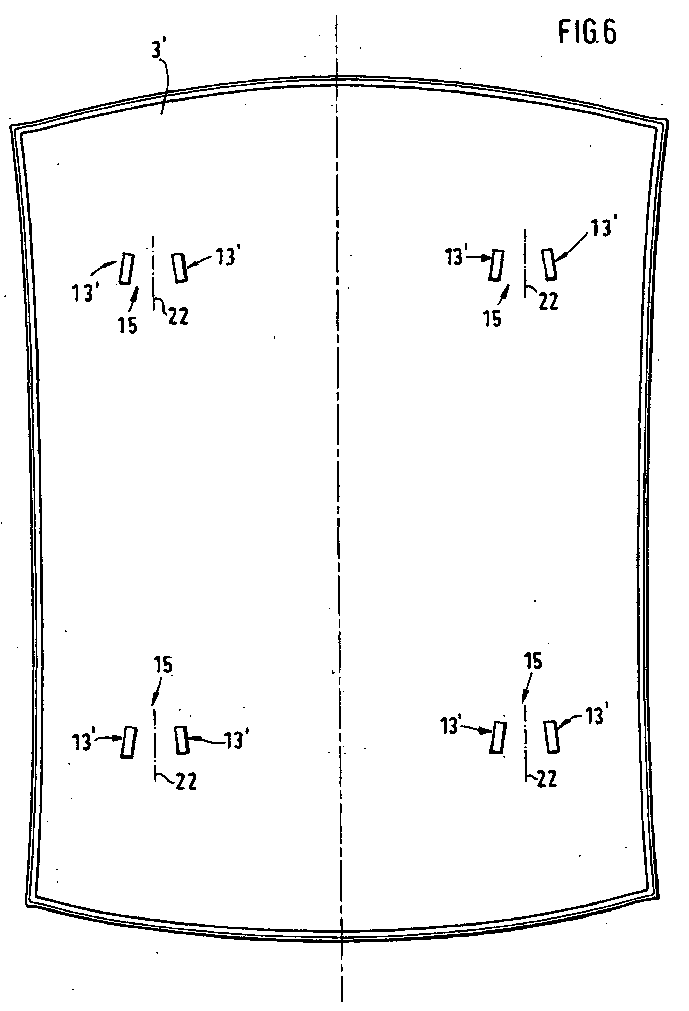

Wie die Figuren 3 und 5 in Verbindung mit Fig. 2 zeigen, sind die schienenartigen ersten und zweiten Führungselemente 11, 13 jeweils aus kurzen Profilabschnitten gebildet und paarweise angeordnet. Anordnungspaare sind an mehreren voneinander beabstandeten Anbringungsorten des Dachhimmels 8 bzw. der Innenschale 3 vorgesehen. Wie am Beispiel der Innenschale 3 gemäß Fig. 5 dargestellt ist, kann es sich dabei um vier voneinander beabstandete Anbringungsorte 15 handeln. Die ersten Führungselemente 11 sind an entsprechenden Anbringungsorten des Dachhimmels 8 vorgesehen.

Die schienenartigen ersten Führungselemente 11 sind an jedem ihrer Anbringungsorte aus paarweise und gegenseitig beabstandeten Winkelprofilabschnitten gebildet, wie Fig. 2 in Verbindung mit Fig. 3 verdeutlicht. Diese Winkelprofilabschnitte sind mit ihren zum Dachhimmel 8 parallelen Schenkeln 16 in entgegengesetzte Richtungen weisend angeordnet. Wie ebenfalls aus Fig. 2 hervorgeht, sind die komplementären schienenartigen zweiten Führungselemente 13 ebenfalls aus paarweise und gegenseitig beabstandeten Winkelprofilabschnitten gebildet, sind aber mit ihren zur Innenschale 3 parallelen Schenkeln 17 zueinander gekehrt.

Wie aus Fig. 3 ersichtlich ist, sind die ersten und zweiten Führungselemente 11, 13 an jedem Anbringungsort paarweise parallel zueinander angeordnet und darüber hinaus bezüglich aller Anbringungsorte parallel zueinander ausgerichtet, wie bezüglich der zweiten Führungselemente 13 aus Fig. 5 hervorgeht.

An den ersten oder den zweiten Führungselementen 11, 13, im gezeichneten Beispiel aber an den zweiten Führungselementen 13, sind Anschläge 18 angebracht. Diese Anschläge sind im gezeichneten Beispiel durch Vorsprünge 19 der Schenkel 17 gebildet, wie aus den Figuren 2, 3 und 5 hervorgeht. Bei der Befestigung des Dachhimmels 8 an der Innenschale 3 begrenzen die Anschläge 18 den Schiebeweg des Dachhimmels 8 bei Erreichen der gewünschten vorgesehenen Relativlage zwischen dem Dachhimmel 8 und der Innenschale 3. Erst wenn diese festgelegte Relativlage erreicht ist, wird der Dachhimmel 8 über die Verbindungskeder 9 mit dem Karosserierahmen 5 verbunden.

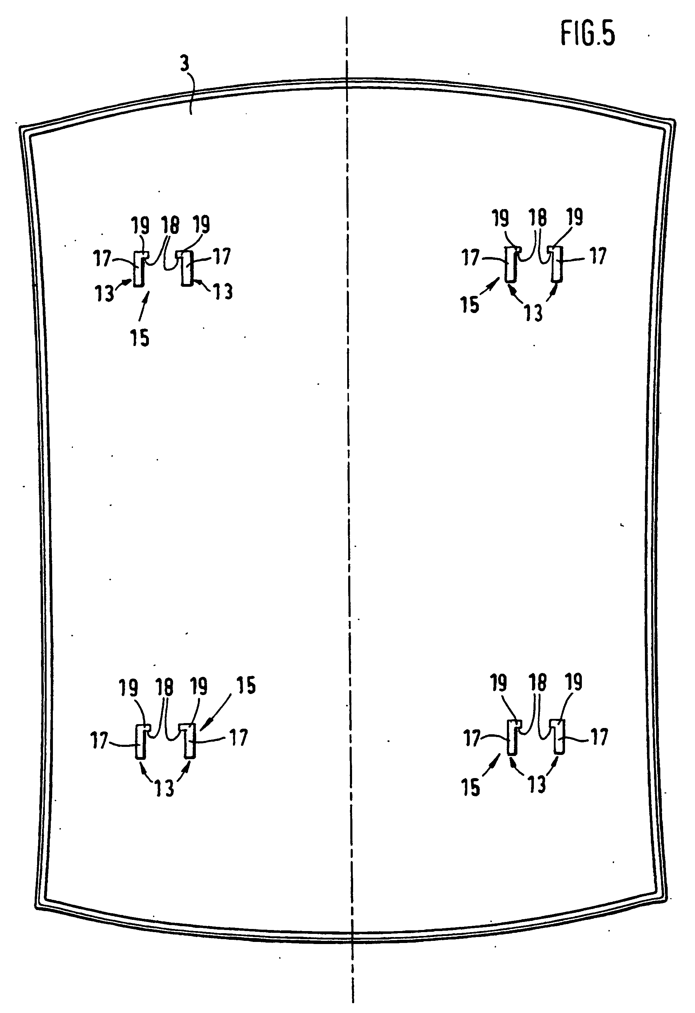

Bei der zweiten Ausführungsform der Führungselemente, die in den Figuren 4 und 6 dargestellt ist, sind die ersten und die zweiten Führungselemente 11', 13' an jedem der beispielsweise vier Anbringungsorte 15 übereinstimmend in Richtung der Befestigungsverschiebung bezüglich zugeordneter Flächen, von denen in Fig. 4 nur die Flächen 20 an den ersten Führungselementen 11' und die Flächen 21 an den zweiten Führungselementen 13' dargestellt sind, paarweise zueinander konvergierend angeordnet. Die Anordnung ist dabei so getroffen, daß sowohl die ersten Führungselemente 11' als auch die zweiten Führungselemente 13' an jedem der Anbringungsorte 15 bezüglich einer Symmetrieachse 22 symmetrisch vorgesehen sind. Die Symmetrieachsen 22 der vier Anbringungsorte 15 wiederum verlaufen parallel zueinander. Aufgrund dieser Gegebenheiten ist bei der Befestigung des Dachhimmels an der Innenschale 3' der Schiebeweg des Dachhimmels in der gewünschten festgelegten Relativlage zwischen dem Dachhimmel und der Innenschale 3' durch das Aufeinandertreffen der zugeordneten Flächen 20 und 21 begrenzt.

Für die beiden bisher beschriebenen Ausführungsformen übereinstimmend sind die ersten Führungselemente 11 bzw. 11' aus dem Schaumkunststoff des Dachhimmels 8 selbst und die zweiten Führungselemente 13 bzw. 13' aus dem Schaumkunststoff der Innenschale 3 bzw. 3' selbst und damit jeweils einteilig geformt.

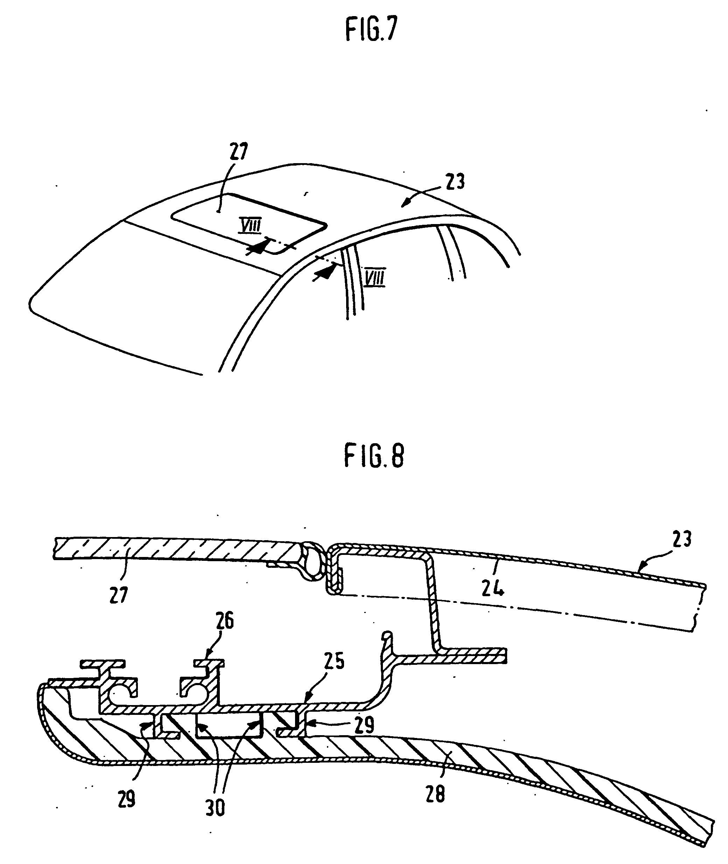

Bei dem in den Figuren 7 und 8 dargestellten Ausführungsbeispiel ist das Fahrzeugdach 23, welches ebenfalls wie vorstehend beschrieben wurde als Dachmodul ausgebildet sein kann, welches zur Befestigung an einem Karosserierahmen bestimmt ist, mit einer Schiebedacheinheit ausgerüstet. Im gezeichneten Beispiel gehört zu dieser Schiebedacheinheit ein mit der festen Dachhaut 24 fest verbundener Schiebedachrahmen 25, an welchem sich Führungsschienen 26 für die Führung von Funktions- und Antriebselementen (nicht dargestellt) für den Schiebedeckel 27 befinden. Im Ausführungsbeispiel ist der Schiebedeckel 27 ein Glasdeckel, könnte aber auch in bekannter Weise als Blechdeckel ausgebildet sein. Der Innenfläche der Dachhaut 24 kann ebenfalls eine Innenschale aus Kunststoff aufgeschäumt sein, wie das in Fig. 8 durch eine Strichpunktlinie angedeutet ist. Die Figuren 7 und 8 zeigen den Schiebedeckel 27 in seiner Schließlage. Der Dachhimmel 28 ist bei diesem Ausführungsbeispiel mit dem Schiebedachrahmen 25 auf noch zu beschreibende Weise lösbar verbunden.

Der Schiebedachrahmen 25 ist aus einem stranggepreßten Aluminiumprofil geformt, an welches im gezeichneten Beispiel nicht nur die Führungsschienen 26 angeformt sind, sondern auch nach unten vorspringend als Profilabschnitte des Schiebedachrahmens 25 ausgebildete zweite Führungselemente 29. Diese Führungselemente 29 können aber auch als getrennte Teile ausgebildet und auf geeignete Weise am Schiebedachrahmen befestigt sein (nicht dargestellt). Die zweiten Führungselemente 29 stimmen in der Anordnung und Funktion mit den zweiten Führungselementen 13 bzw. 13' der vorstehend beschriebenen Ausführungsformen überein. Sie sind ebenfalls schienenartig ausgebildet und besitzen hinterschnittene Gleitflächen, wie das mit Bezug auf Fig. 2 anhand der Gleitflächen 14 beschrieben wurde.

Der Dachhimmel 28 ist auch bei diesem Ausführungsbeispiel als getrenntes Teil aus Schaumkunststoff vorgeformt und an seiner Oberseite mit schienenartigen ersten Führungselementen 30 versehen. Diese Führungselemente weisen ebenfalls hinterschnittene Gleitflächen auf, wie das mit Bezug auf Fig. 2 anhand der Gleitflächen 12 beschrieben worden ist. Wie Fig. 8 veranschaulicht, sind die ersten Führungselemente 30 und die zweiten Führungselemente 29 komplementär ausgebildet. Auch bei diesem Ausführungsbeispiel werden zur Befestigung des Dachhimmels 8 an dem Schiebedachrahmen 25 die ersten Führungselemente 30 auf die zweiten Führungselemente 29 mit ihren jeweiligen hinterschnittenen Gleitflächen eingreifend in Parallellage des Dachhimmels 28 zum Schiebedachrahmen 25 aufgeschoben, bis eine definierte festgelegte Relativlage von Schiebedachrahmen 25 und Dachhimmel 28 erreicht ist. Die definierte Relativlage kann bei parallel zueinander ausgerichteten ersten und zweiten Führungselementen 30, 29 durch Anschläge festgelegt sein, wie das mit Bezug auf die Figuren 3 und 5 beschrieben wurde. Die Führungselemente 29 und 30 können aber auch zur Festlegung der definierten Relativposition konvergierend zueinander angeordnet sein, wie das mit Bezug auf die Figuren 4 und 6 beschrieben worden ist, wobei dann aber eine einteilige Extrusionsformung der Führungselemente 29 mit dem Rahmen 25 nicht möglich ist.

Fig. 8 läßt erkennen, daß die ersten Führungselemente 30 aus dem Schaumkunststoff des Dachhimmels 28 selbst und damit einteilig geformt sind.

Vorgeschlagen wird ein insbesondere für Kraftfahrzeuge bestimmtes Fahrzeugdach, insbesondere ein getrennt von der Karosserie anzufertigendes und mit dem Karosserierahmen zu vereinigendes Dachmodul, das im wesentlichen aus einer starren Dachhaut, ggf. einer darauf aufgeschäumten Innenschale aus Schaumkunststoff und einem dekorativen Dachhimmel aus Schaumkunststoff besteht. Das Dachmodul kann mit einer integrierten Schiebedacheinheit ausgerüstet sein. Die Besonderheit besteht darin, daß der Dachhimmel getrennt vom Dachmodul hergestellt und über komplementäre paßgenau angebrachte Führungselemente mit der Innenschale oder ggf. mit dem Schiebedachrahmen der Schiebedacheinheit lösbar in Eingriff gebracht werden kann, d.h. austauschbar ist.

### Bezugszeichenliste

- 1: Dachmodul
- 2: Dachhaut
- 3: Innenschale
- 4: Randabkantung
- 5: Karosserierahmen
- 6: Aufnahmenut
- 7: Kleberraupe
- 8: Dachhimmel
- 9: Verbindungskeder
- 10: Beschichtung
- 11, 11': erste Führungselemente
- 12: hinterschnittene Gleitflächen
- 13, 13': zweite Führungselemente
- 14: hinterschnittene Gleitflächen
- 15: Anbringungsorte
- 16: Schenkel
- 17: Schenkel
- 18: Anschläge
- 19: Vorsprünge
- 20: Fläche
- 21: Fläche
- 22: Symmetrieachse
- 23: Fahrzeugdach
- 24: feste Dachhaut
- 25: Schiebedachrahmen
- 26: Führungsschienen
- 27: Schiebedeckel
- 28: Dachhimmel
- 29: zweite Führungselemente
- 30: erste Führungselemente

## Patentansprüche

1. Fahrzeugdach, insbesondere für Kraftfahrzeuge, mit einer starren Dachhaut (2) und einer an deren Innenfläche angeschäumten Innenschale (3) aus Kunststoff, wobei mit der Innenschale (3) ein Dachhimmel (8) verbunden ist, **dadurch gekennzeichnet, daß** der als getrenntes Teil aus Schaumkunststoff vorgeformte Dachhimmel (8) an seiner Oberseite mit schienenartigen ersten Führungselementen (11, 11'), die hinterschnittene Gleitflächen (12) aufweisen und aus dem Schaumkunststoff des Dachhimmels (8) selbst und damit einteilig geformt sind, versehen ist, denen komplementär ausgebildete schienenartige zweite Führungselemente (13, 13') an der Innenschale (3, 3') zugeordnet sind, die ebenfalls hinterschnittene Gleitflächen (14) besitzen und aus dem Schaumkunststoff der Innenschale (3) selbst und damit einteilig geformt sind, wobei zur Befestigung des Dachhimmels (8) an der Innenschale (3) die ersten Führungselemente (11, 11') auf die zweiten Führungselemente (13, 13') mit ihren jeweiligen hinterschnittenen Gleitflächen (12, 14) eingreifend bis zu einer definierten Relativposition von Innenschale (3) und Dachhimmel (8) in Parallellage aufgeschoben sind.

2. Fahrzeugdach, insbesondere für Kraftfahrzeuge, mit einer starren Dachhaut (24) und einem mit der Dachhaut (24) fest verbundenen Schiebedachrahmen (25) einer Schiebedacheinheit, wobei mit dem Schiebedachrahmen (25) ein Dachhimmel (28) verbunden ist, **dadurch gekennzeichnet, daß** der als getrenntes Teil aus Schaumkunststoff vorgeformte Dachhimmel (28) an seiner Oberseite mit schienenartigen ersten Führungselementen (30), die hinterschnittene Gleitflächen aufweisen, versehen ist, denen komplementär ausgebildete schienenartige zweite Führungselemente (29) an dem Schiebedachrahmen (25) zugeordnet sind, die ebenfalls hinterschnittene Gleitflächen besitzen, wobei zur Befestigung des Dachhimmels (28) an dem Schiebedachrahmen (25) die ersten Führungselemente (30) auf die zweiten Führungselemente (29) mit ihren jeweiligen hinterschnittenen Gleitflächen eingreifend bis zu einer definierten Relativposition von Schiebedachrahmen (25) und Dachhimmel (28) in Parallellage aufgeschoben sind.

3. Fahrzeugdach nach Anspruch 1 oder 2, **dadurch gekennzeichnet, daß** die schienenartigen ersten und zweiten Führungselemente (11, 11'; 13, 13'; 30, 29) jeweils aus kurzen Profilabschnitten gebildet und paarweise angeordnet an mehreren voneinander beabstandeten Anbringungsorten (15) des Dachhimmels (8; 28) bzw. der Innenschale (3) bzw. des Schiebedachrahmens (25) vorgesehen sind.

4. Fahrzeugdach nach den Ansprüchen 1 oder 2 und 3, **dadurch gekennzeichnet, daß** die schienenartigen ersten Führungselemente (11, 11'; 30) an jedem Anbringungsort (15) aus paarweise und gegenseitig beabstandeten Winkelprofilabschnitten gebildet sind, die mit ihren zum Dachhimmel (8; 28) parallelen Schenkeln (16) in entgegengesetzte Richtungen weisen, während die komplementären schienenartigen zweiten Führungselemente (13, 13'; 29) ebenfalls aus paarweise und gegenseitig beabstandeten Winkelprofilabschnitten gebildet sind, die aber mit ihren zur Innenschale (3) bzw. zum Schiebedachrahmen (25) parallelen Schenkeln (17) zueinandergekehrt sind.

5. Fahrzeugdach nach einem der Ansprüche 1 oder 2, 3 und 4, **dadurch gekennzeichnet, daß** die ersten und zweiten Führungselemente (11, 13; 30, 29) an jedem Anbringungsort (15) paarweise parallel zueinander und an allen Anbringungsorten (15) parallel zueinander angeordnet sind.

6. Fahrzeugdach nach Anspruch 5, **dadurch gekennzeichnet, daß** an den ersten oder den zweiten Führungselementen (11, 13; 30, 29) Anschläge (18) angebracht sind, welche bei der Befestigung des Dachhimmels (8; 28) dessen Schiebeweg bei Erreichen der gewünschten Relativlage zwischen dem Dachhimmel (8; 28) und der Innenschale (3) bzw. dem Schiebedachrahmen (25) begrenzen.

7. Fahrzeugdach nach einem der Ansprüche 1 oder 2, 3 und 4, **dadurch gekennzeichnet, daß** die ersten und zweiten Führungselemente (11', 13'; 30, 29) an jedem Anbringungsort (15) übereinstimmend in Richtung der Befestigungsverschiebung bezüglich zugeordneter Flächen (20, 21) paarweise zueinander konvergierend angeordnet sind, wobei bei der Befestigung des Dachhimmels (8; 28) dessen Schiebeweg in der gewünschten Relativlage zwischen dem Dachhimmel (8; 28) und der Innenschale (3) bzw. dem Schiebedachrahmen (25) durch das Aufeinandertreffen der zugeordneten Flächen (20, 21) begrenzt ist.

8. Fahrzeugdach nach einem der Ansprüche 2 bis 7, **dadurch gekennzeichnet, daß** die ersten Führungselemente (30) aus dem Schaumkunststoff des Dachhimmels (28) selbst und damit einteilig geformt sind, während die zweiten Führungselemente (29) als Profilabschnitte des Schiebedachrahmens (25) ausgebildet oder als getrennte Teile daran befestigt sind.

## Claims

1. A vehicle roof, in particular for motor vehicles, having a rigid roof skin (2) and an inner shell (3) of plastics material foamed onto the inner surface thereof, a roof liner (8) being connected with the inner shell (3), **characterized in that** the roof liner (8) preformed from foamed plastics material as a separate component is provided on its upper side with rail-like first guide elements (11, 11') comprising undercut sliding surfaces (12) and being formed from the foamed plastics material of the roof liner (8) itself and in one piece with it, with which first guide elements there are associated complementarily constructed rail-like second guide elements (13, 13') on the inner shell (3, 3'), likewise comprising undercut sliding surfaces (14) and being formed from the foamed plastics material of the inner shell (3) itself and in one piece with it, wherein, to attach the roof liner (8) to the inner shell (3), the first guide elements (11, 11') are slid in parallel onto the second guide elements (13, 13'), with their respective undercut sliding surfaces (12, 14) in engagement, as far as a defined relative position of inner shell (3) and roof liner (8).

2. A vehicle roof, in particular for motor vehicles, having a rigid roof skin (24) and a sunroof frame (25) of a sunroof unit firmly connected with the roof skin (24), a roof liner (28) being connected with the sunroof frame (25), **characterized in that** the roof liner (8) preformed from foamed plastics material as a separate component is provided on its upper side with rail-like first guide elements (30) comprising undercut sliding surfaces, with which first guide elements there are associated complementarily constructed rail-like second guide elements (29) on the sunroof frame (25), likewise comprising undercut sliding surfaces, wherein, to attach the roof liner (28) to the sunroof frame (25), the first guide elements (30) are slid in parallel onto the second guide elements (29), with their respective undercut sliding surfaces in engagement, as far as a defined relative position of sunroof frame (25) and roof liner (28).

3. A vehicle roof according to claim 1 or 2, **characterized in that** the rail-like first and second guide elements (11, 11'; 13, 13'; 30, 29) each take the form of short profile portions and are provided in pairs at a plurality of mutually spaced attachment locations (15) of the roof liner (8; 28) or the inner shell (3) or the sunroof frame (25) respectively.

4. A vehicle roof according to claims 1 or 2 and 3, **characterized in that** the rail-like first guide elements (11, 11'; 30) take the form of paired, mutually spaced angular profile portions at each attachment location (15), whose arms (16) parallel to the roof liner (8; 28) point in opposite directions, while the complementary rail-like second guide elements (13, 13'; 29) likewise take the form of paired, mutually spaced angular profile portions, whose arms (17) parallel to the inner shell (3) or the sunroof frame (25) respectively point towards one another, however.

5. A vehicle roof according to one of claims 1 or 2, 3 and 4, **characterized in that** the first and second guide elements (11, 13; 30, 29) are arranged parallel to one another in pairs at each attachment location (15) and parallel to one another at all the attachment locations (15).

6. A vehicle roof according to claim 5, **characterized in that** limit stops (18) are attached to the first and second guide elements (11, 13; 30, 29), which limit the displacement path of the roof liner (8; 28) during attachment of the latter upon reaching the desired relative position between the roof liner (8; 28) and the inner shell (3) or the sunroof frame (25) respectively.

7. A vehicle roof according to one of claims 1 or 2, 3 and 4, **characterized in that** the first and second guide elements (11', 13'; 30, 29) are arranged at each attachment location (15) so as to converge congruently in pairs in the direction of attachment displacement with regard to associated surfaces (20, 21), wherein, when the roof liner (8; 28) is attached, the displacement path thereof is limited in the desired relative position between the roof liner (8; 28) and the inner shell (3) or the sunroof frame (25) respectively by meeting of the associated surfaces (20, 21).

8. A vehicle roof according to one of claims 2 to 7, **characterized in that** the first guide elements (30) are formed from the foamed plastics material of the roof liner (28) itself and in one piece with it, while the second guide elements (29) take the form of profile portions of the sunroof frame (25) or are attached as separate components thereto.

## Revendications

1. Toit de véhicule, en particulier pour des véhicules automobiles, comportant une carrosserie de toit (2) rigide et une coque interne (3) en matière plastique expansée contre la face intérieure de ladite carrosserie de toit, un ciel de toit (8) étant assemblé à la coque interne (3), **caractérisé en ce que** le ciel de toit (8) préfabriqué sous forme de pièce séparée en matière plastique alvéolaire est muni, sur sa face supérieure, de premiers éléments de guidage (11, 11') de type rails, qui comportent des surfaces de glissement (12) en contre-dépouille et sont réalisés dans la matière plastique alvéolaire du ciel de toit (8) lui-même et formés d'un seul tenant avec celui-ci, auxquels sont associés des deuxièmes éléments de guidage (13, 13') de type rails, conçus de manière complémentaire sur la coque interne (3, 3'), lesquels également comportent des surfaces de glissement (14) en contre-dépouille et sont réalisés dans la matière plastique alvéolaire de la coque interne (3) elle-même et formés d'un seul tenant avec celle-ci, les premiers éléments de guidage (11, 11'), en vue de la fixation du ciel de toit (8) contre la coque interne (3), étant coulissés en position parallèle sur les deuxièmes éléments de guidage (13, 13') en faisant entrer en prise leurs surfaces de glissement (12, 14) en contre-dépouille respectives jusqu'à obtenir une position relative définie entre la coque interne (3) et le ciel de toit (8).

2. Toit de véhicule, en particulier pour des véhicules automobiles, comportant une carrosserie de toit (24) rigide et un cadre (25) d'une unité de toit ouvrant, assemblé fermement avec la carrosserie de toit (24), un ciel de toit (28) étant assemblé avec le cadre du toit ouvrant (25), **caractérisé en ce que** le ciel de toit (28) préfabriqué sous forme de pièce séparée en matière plastique alvéolaire est muni, sur sa face supérieure, de premiers éléments de guidage (30) de type rails, qui comportent des surfaces de glissement en contre-dépouille et auxquels sont associés des deuxièmes éléments de guidage (29) de type rails, conçus de manière complémentaire sur le cadre de toit ouvrant (25) et qui également comportent des surfaces de glissement, les premiers éléments de guidage (30), en vue de la fixation du ciel de toit (28) contre le cadre de toit ouvrant (25), étant coulissés en position parallèle sur les deuxièmes éléments de guidage (29) en faisant entrer en prise leurs surfaces de glissement en contre-dépouille respectives jusqu'à obtenir une position relative définie entre le cadre de toit ouvrant (25) et le ciel de toit (28).

3. Toit de véhicule selon la revendication 1 ou 2, **caractérisé en ce que** les premiers et les deuxièmes éléments de guidage (11, 11' ; 13, 13' ; 30, 29) de type rails sont formés respectivement par de courts tronçons de profilés et sont agencés par paires en plusieurs emplacements de montage (15) écartés les uns des autres sur le ciel de toit (8 ; 28) ou la coque interne (3) ou le cadre de toit ouvrant (25).

4. Toit de véhicule selon les revendications 1 ou 2 et 3, **caractérisé en ce que** les premiers éléments de guidage (11, 11' ; 30) de type rails sur chaque emplacement de montage (15) sont formés par des tronçons de cornières appariés et écartés réciproquement, qui sont orientés dans des directions opposées avec leurs branches (16) parallèles au ciel de toit (8 ; 28), alors que les deuxièmes éléments de guidage (13, 13' ; 29) de type rails complémentaires sont également formés par des tronçons de cornières appariés et écartés réciproquement, mais sont orientés les uns vers les autres avec leurs branches (17) parallèles à la coque interne (3) ou au cadre de toit ouvrant (25).

5. Toit de véhicule selon les revendications 1 ou 2, 3 et 4, **caractérisé en ce que** les premiers et les deuxièmes éléments de guidage (11, 13 ; 30, 29) sont agencés par paires parallèlement les uns aux autres sur chaque emplacement de montage (15) et parallèlement les uns aux autres sur tous les emplacements de montage (15).

6. Toit de véhicule selon la revendication 5, **caractérisé en ce que** sur les premiers ou les deuxièmes éléments de guidage (11, 13 ; 30, 29) sont agencées des butées (18) qui, au moment de la fixation du ciel de toit (8 ; 28), limitent la trajectoire de coulissement de celui-ci lorsque la position relative souhaitée est établie entre le ciel de toit (8 ; 28) et la coque interne (3) ou le cadre de toit ouvrant (25).

7. Toit de véhicule selon les revendications 1 ou 2, 3 et 4, **caractérisé en ce que** les premiers et les deuxièmes éléments de guidage (11', 13' ; 30, 29) sont agencés sur chaque emplacement de montage (15) par paires convergeant les unes vers les autres par rapport à des surfaces associées (20, 21) de manière concordante dans la direction du coulissement de fixation, la rencontre des surfaces associées (20, 21) délimitant, au moment de la fixation du ciel de toit (8 ; 28), la trajectoire de coulissement de celui-ci dans la position relative souhaitée entre le ciel de toit (8 ; 28) et la coque interne (3) ou le cadre de toit ouvrant (25).

8. Toit de véhicule selon l'une quelconque des revendications 2 à 7, **caractérisé en ce que** les premiers éléments de guidage (30) sont formés dans la matière plastique alvéolaire du ciel de toit (28) lui-même et réalisés d'un seul tenant avec celui-ci, alors que les deuxièmes éléments de guidage (29) sont conçus sous forme de tronçons de profilés du cadre de toit ouvrant (25) ou sont fixés contre celui-ci sous forme d'éléments séparés.
